# EUROPÄISCHE PATENTANMELDUNG

(11) **EP 3 278 659 A1**
(43) Veröffentlichungstag der Anmeldung: **07.02.2018**
(21) Anmeldenummer: 17001295.9
(22) Anmeldetag: 27.07.2017
(51) Int. Cl.: A01G 23/00

(54) **RÜCKEVERFAHREN FÜR HANGWÄLDER-DURCHFORSTUNGEN**

(30) Priorität: 05.08.2016 AT 3662016
(71) Anmelder: PROCON GesmbH, 4600 Wels (AT)
(72) Erfinder: Prokesch, Rudolf, 4612 Scharten (AT)
(74) Vertreter: Müller, Volkmar

(57) **Zusammenfassung**

Das Rücken bereits gefällter und ungeordnet auf dem Waldboden von Hangwäldern liegenden Bäumen und Ästen soll unmittelbar und direkt zu einem geländegängig und waldbodenschonend ausgebildeten Arbeitsgeräte-Fahrzeug (1) hingerichtet erfolgen. Das Arbeitsgeräte-Fahrzeug (1) ist mit Arbeitsgeräten (5) für Entastung, Stücktrennung, Zwischenlagerung sowie für Ableitungen auszustatten.

Das Verfahren hat die wiederholbaren
- Positionierungen und Positionsarretierungen (10),
- Waagerecht-Stellungen (16) des Arbeitstisches (4),
- Seilzug-Rückungen (17), sowie nach der
- Entpositionierung die
- Fahrzeug-Umsetzungen (18)
des Arbeitsgeräte-Fahrzeuges (1) zum Inhalt.

Die für den Verfahrensablauf notwendigen Ausbildungen der Funktionselemente sind benannt.

## Beschreibung

Die Erfindung geht von dem im Oberbegriff des Patentanspruches 1 definierten Verfahren aus, welches mit einem, als Rücketraktor, mobiles Arbeitsgerät oder Forstfahrzeug bezeichneten, Arbeitsgeräte-Fahrzeug, unter den Bedingungen von Gebirgs- und Hangwäldern mit unterschiedlich steilen Hanglagen und unebenen Waldböden, waldbodenschonend durchführbar sein muss.

Beispielhaft für den Stand der Technik sollen die nachstehenden Lösungen, die Gegenstand in Erfindungsbeschreibungen sind, benannt werden.
Seilzug- und Kranrückungen von Ästen und Bäumen mit anschließender Entastung sind Gegenstand in
- AT 575 498 B1
   mittels eines über Antriebsräder bewegten Arbeitsgerätes mit Rückekran
- US 4365 927
   mittels dreier Fahrzeuge, eines über Antriebsräder bewegten Seiltrommel-Haltefahrzeugs, eines über Seile angehängten Raupenketten-Transportwagens und eines ebenfalls mit Seilen angehängten und mit Raupen-Fahrwerk ausgestatteten Rückekrans
- DE 2715 509 C2
   mittels eines mit Rädern ausgestatteten Traktors, eines an diesem angehängten Zugseilkrans und eines weiteren über Zugseile angehängten und mit Raupenketten ausgestatteten Arbeitswagens
   sowie in
- DD 295 071 AS
   mittels eines flächendeckenden, mehrfach mehreckig umgelenkten, mit mehreren Seilwinden und Holzangen-Greifern ausgebildeten Seilzug-Systems, von einem stationären Traktor als Seilwinden-Standort aus, betrieben.

Die verfahrenswirksamen Nachteile dieser mobilen Arbeitsgeräte bestehen in
- einer geringen oder fehlenden Geländegängigkeit,
- einer reduzierten Stand- und Fahrsicherheit in den Hanglagen und bei unebenen Waldböden in den Hangwäldern,
- einer ausschließlich auf die Bediener-Kabine und auf den Rückekran beschränkten Waagerecht-Stellung der Arbeitsgeräte,
- einem hohen Wagen- und Geräteaufwand,
- einer bei unebenen Waldböden und vielen Baumstümpfen nur eingeschränkt anwendbaren Seilzug-Rückung nach DD 295 071 AS.

Die daraus abgeleitete Problemstellung ist
- eine gute Geländegängigkeit sowie hohe Stand- und Fahrsicherheit zu gewährleisten,
- einen geringen Wagen- und Geräteaufwand sowie
- eine störungsfreie Verfahrensdurchführung anzustreben.

Diese Problemstellung wird durch den Patentanspruch 1, wie folgt, gelöst:
Das Rückeverfahren, welches in wiederholbarer Folge an vorbestimmten Hangwaldstandorten durchführbar ist, besteht aus den Verfahrensschritten:
   - Positionierung und Positionsarretierung
      nur eines Arbeitsgeräte-Fahrzeuges, welches dabei
      entweder in einer längs gerichteten Arbeitsstellung auf einem zur Hanglage quer gerichtet verlaufenden Forstweg
      oder
      in einer längs des Hangverlaufes gerichteten Arbeitsstellung, mit dem Antriebsmotor nach oben gerichtet, oberhalb oder unterhalb des Forstweges angeordnet ist.
   - Waagerecht-Stellung oder-Schwenkung des Arbeitstisches am Arbeitsgeräte-Fahrzeug an, der dem Hangverlauf anzupassen ist.

Diesem Verfahrensschritt folgen die
- Seilzug-Rückungen
   in einem niederen, unteren und halbkreisförmigen Rückebereich, um das Arbeitsgeräte-Fahrzeug herum, stattfindend.

Nach der Entpositionierung erfolgt eine
- Fahrzeug-Umsetzung
   in andere Arbeitsstellungen sowie an andere Hangwald-Standorte.

Ergänzend dazu beinhalten die Patentansprüche 2 und 3
- die verfahrensschrittspezifischen Ausbildungen der Funktionselemente des geländegängigen und waldbodenschonenden Arbeitsgeräte-Fahrzeuges und dessen Steuerbarkeit sowie
- die Bearbeitbarkeit eines aus den Rückebereichen der verschiedenen Arbeitsstellungen mosaikartig gebildeten Hangwald-Standortes.

Die Erfindung ist anwendungsbezogen an einem Ausführungsbeispiel vereinfacht dargestellt und im folgenden Teil der Beschreibung näher erläutert. Gezeigt wird in
- Fig. 1: eine Arbeitsstellung des Arbeitsgeräte-Fahrzeuges auf einem Forstweg,
- Fig. 2: die folgenden Arbeitsstellungen oberhalb und unterhalb des Forstweges, um die das Rückeverfahren durchführbar ist und in
- Fig. 3: eine Ansicht des Arbeitsgeräte-Fahrzeuges in einer Arbeitsstellung im Hangwald.

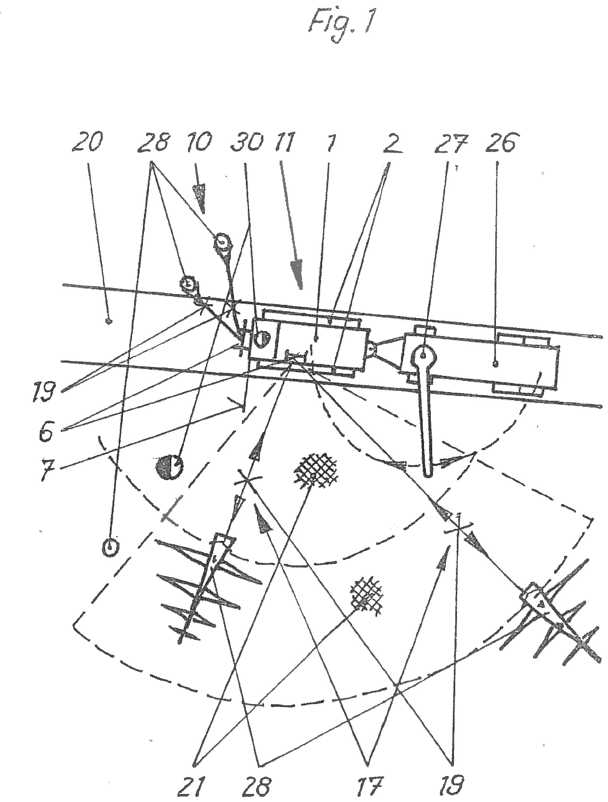

Das in Fig. 1 dargestellte Rückefahrzeug ist ein geländegängiges, motorisch angetriebenes und mit Raupenketten (2) ausgestattetes Arbeitsgeräte-Fahrzeug (1), welches gemeinsam mit einem angehängten Holztransport-Wagen (26) vom Bediener (30) in einen Hangwald gefahren und dort auf einem quergerichtet zur Hanglage verlaufenden Forstweg (20) in einer längs gerichteten ersten Arbeitsstellung (11) positioniert wurde. Die Positionierung und die Positionsarretierung (10) erfolgt durch die Raupenketten (2) und mittels an den Baumstümpfen (29) angehängter Zugseile (19), ausgehend von der an der vorderen Motorseite (7) befindlichen Seilzugwinde (6). Nach der Waagerecht-Stellung (16) des Arbeitstisches (4) erfolgt im gesamten Rückebereich (21) in mehreren Arbeitsschritten die Seilzug-Rückung (17) der bereits abgesägten, liegenden Äste und Bäume (28), nach ihrer Seilschlaufen-Anhängung, unmittelbar und als radial gerichtetes, sich wiederholendes Anziehen des Zugseiles (19) durch eine ebenfalls hydromotorisch angetriebene, auf dem Arbeitstisch (4) angeordnete, Zugseilwinde (6) zum und auf den Arbeitstisch (4). Mittels Arbeitsgeräten (5) erfolgen dort die Entastung, die Stücktrennung und eine Zwischenlagerung.
Die Entnahme der Holzstücke vom Arbeitstisch (4) und deren Ablage auf dem daneben positionierten Holztransport-Wagen (26) ist mittels des Holztransport-Kranes (27) durchführbar.

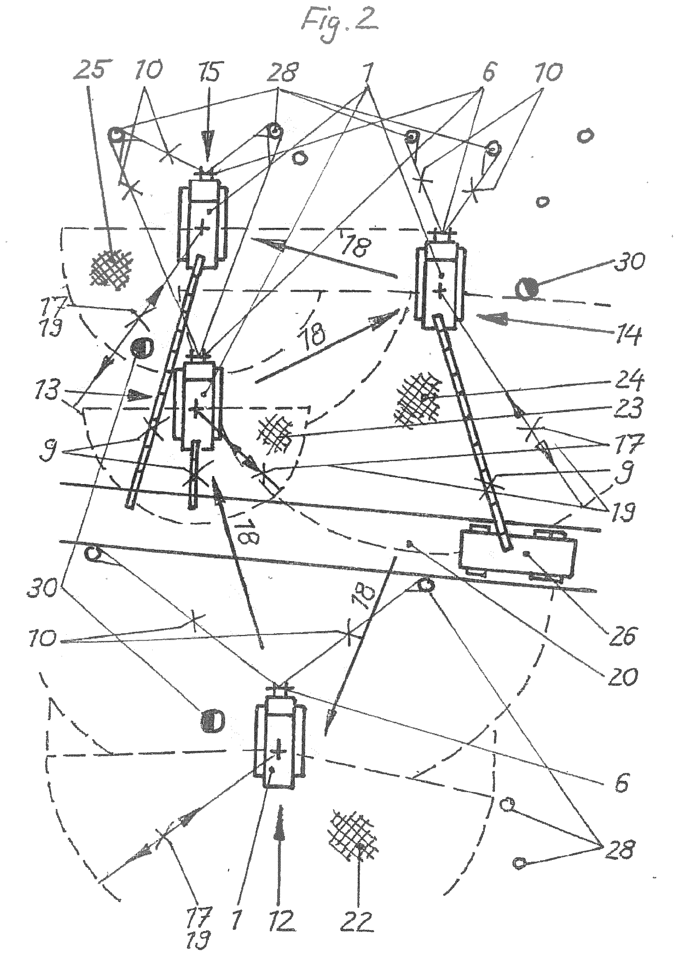

In Fig. 2 sind die Folge und der sich wiederholende Ablauf der benannten und in Fig. 1 bezogen auf die erste Arbeitsstellung (11) dargestellten Verfahrensschritte unter Verwendung des geländegängigen und motorisch angetriebenen Arbeitsgeräte-Fahrzeuges (1) dargestellt.
Nach Beendigung der Seilzug-Rückungen (17) im Rückebereich (22) um die zweite Arbeitsstellung (12) des Arbeitsgeräte-Fahrzeuges (1) in einer Hanglage unterhalb des Forstweges (20), erfolgt eine Fahrzeug-Umsetzung (18) in Richtung der vorbestimmten dritten Arbeitsstellung (13) oberhalb des Forstweges (20). Nach Beendigung der Seilzug-Rückungen (17) im Rückebereich (23) um diese dritte Arbeitsstellung (13) des Arbeitsgeräte-Fahrzeuges, sind, nach weiteren Fahrzeug-Umsetzungen (18) in Richtung der vorbestimmten vierten und fünften Arbeitsstellungen (14 und 15), Seilzug-Rückungen (17) in den Rückebereichen (24) und (25) durchführbar.
An den drei Arbeitsstellungen oberhalb des Forstweges (20) erfolgt die Ableitung der in Stücke geschnittenen Hölzer rutschend über flexibel verlängerbare Ableit-Rinnen (9) zu dem auf dem tiefer gelegenen Forstweg (20) abgestellten Holztransport-Wagen (26).

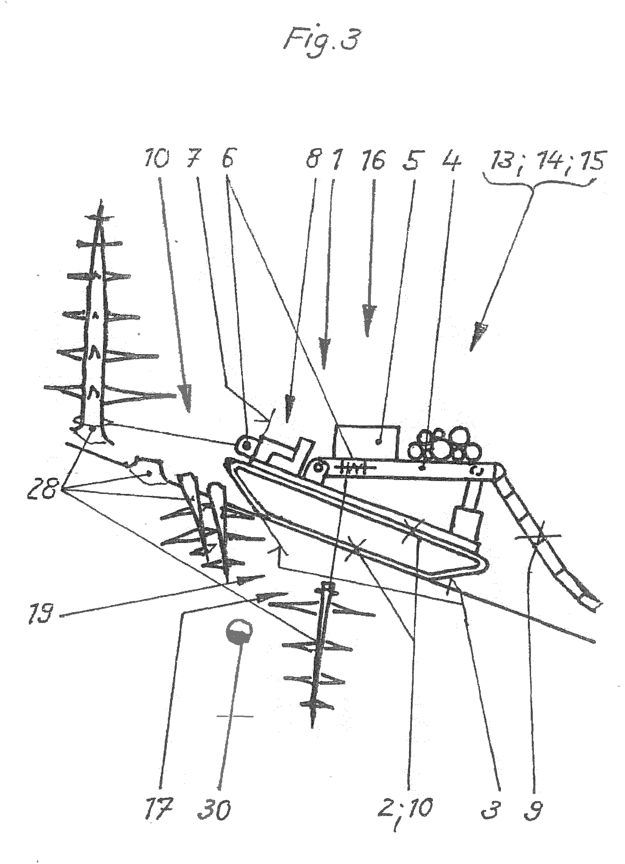

Das in Fig. 3 dargestellte Arbeitsgeräte-Fahrzeug (1) verfügt über ein Raupenketten-Fahrwerk. Auf dem Oberteil des Arbeitsgeräte-Fahrzeuges (1) sind im Wesentlichen der waagerecht stellbare Arbeitstisch (4) mit großer Flächenausdehnung für die aufliegenden Arbeitsgeräte (5) für die durchzuführende Entastung, Stücktrennung, Zwischenlagerung und Entnahme bzw. Ableitung der durch die Seilzug-Rückungen (17) zugeführten Äste und Bäume (28), Seilzugwinden (6) für die Seilzug-Rückungen (17) sowie die Positionsarretierung (10) und ein offener Fahrer-Bedienstand (8) auf der vorderen Motorseite (7) angeordnet.
Die Raupenketten (2) des Raupenketten-Fahrwerkes verfügen an ihrem vorderen und hinteren Kontaktflächenende über stark gewinkelte Aufsteigerflächen (3), mit denen bei stark welligen und unebenen Hangflächen eine gute Geländegängigkeit des Arbeitsgeräte-Fahrzeuges (1) gewährleistet ist.

**Bezugszeichenliste**

| | | |
|---|---|---|
| 1 | Arbeitsgeräte-Fahrzeug | |
| 2 | Raupenkette(n) | an 1 |
| 3 | Aufsteigefläche(n) | an 2 |
| 4 | (waagerecht stellbarer) Arbeitstisch | |
| 5 | Arbeitsgeräte | auf 4 |
| 6 | Seilzugwinde(n) | für 10 und 17 |
| 7 | vordere Motorseite | von 1 |
| 8 | (offener) Fahrer-Bedienstand | von 1 |
| 9 | Ableit-Rinne | |
| 10 | Positionierung und Positionsarretierung | an 11 bis 15 |
| 11 | (erste) Arbeitsstellung | von 1 |
| 12 | (zweite) Arbeitsstellung | von 1 |
| 13 | (dritte) Arbeitsstellung | von 1 |
| 14 | (vierte) Arbeitsstellung | von 1 |
| 15 | (fünfte) Arbeitsstellung | von 1 |
| 16 | Waagerecht-Stellung | von 4 |
| 17 | Seilzug-Rückung(en) | mit 6 |
| 18 | (Richtungen der) Fahrzeug-Umsetzungen | |
| 19 | Zugseile | |
| 20 | Forstweg | |
| 21 | Rückebereich | um 11 |
| 22 | Rückebereich | um 12 |
| 23 | Rückebereich | um 13 |
| 24 | Rückebereich | um 14 |
| 25 | Rückebereich | um 15 |
| 26 | Holztransport-Wagen | |
| 27 | Holztransport-Kran | auf 26 |
| 28 | Bäume | |
| 29 | Baumstümpfe | |
| 30 | Bediener | |

## Patentansprüche

1. Rückeverfahren für Hangwald-Durchforstungen unter Verwendung eines geländegängigen, motorisch angetriebenen Arbeitsgeräte-Fahrzeuges, welches waldbodenschonend mit einem Raupenketten-Fahrwerk ausgestattet ist,
**dadurch gekennzeichnet,**
**dass** in wiederholbarer Folge an vorbestimmten Hangwaldstandorten
• eine Positionierung und Positionsarretierung (10) des Arbeitsgeräte-Fahrzeuges (1) entweder
in einer längs gerichteten Arbeitsstellung (11) auf einem zur Hanglage quergerichtet verlaufenden Forstweg (20) oder
in einer längs des Hangverlaufes gerichteten Arbeitsstellung (11), mit dem Antriebsmotor nach oben gerichtet, oberhalb oder unterhalb von Forstwegen (20) angeordnet,
• eine Waagerecht-Stellung (16) oder - Schwenkung des Arbeitstisches (4), die dem Hangverlauf angepasst ist,
• mehrere Seilzug-Rückungen (17) in einem niederen, unteren und halbkreisförmigen Rückebereich (21 bis 25), um das Arbeitsgeräte-Fahrzeug (1) herum, sowie nach
• einer Entpositionierung
• eine Fahrzeug-Umsetzung (18) in andere Arbeitsstellungen (12-15) und in andere Hangwald-Standorte durchführbar sind.

2. Rückeverfahren für Hangwald-Durchforstungen nach Patentanspruch 1,
**dadurch gekennzeichnet,**
**dass** das für die Verfahrensdurchführung verwendete Arbeitsgeräte-Fahrzeug (1) für die
• Positionierung und Positionsarretierung (10)
mittels
eng beabstandeten Raupenketten (2) ausreichender Breite und Profilierung abgestützt und mittels hydromotorisch angetriebenen Seilzugwinden (6), an der vorderen Motorseite (7) angeordnet, arretiert sind,
• Waagerecht-Stellung (16) des Arbeitstisches (4) mittels Hydraulik-Stützzylindern ausgestattet ist, so dass die Arbeitsgeräte (5) für Entastung, Stücktrennung, Zwischenlagerung und Entnahme bzw. Ableitung der bearbeiteten Äste und Bäume (28) auf einem Arbeitstisch (4) mit großer Flächenausdehnung, hangwaldspezifisch ausgewählt, austauschbar angeordnet sind,
• Seilzug-Rückungen (17) nach einer Seilschlaufen-Anhängung unmittelbar und radial gewichtet von speziellen hydromotorisch angetriebenen, seitlich an oder auf dem Arbeitstisch (4) angeordneten Seilzugwinden (6) aus, durchführbar sind, und die Größe eines Rückebereiches (21 bis 25) durch die ausziehbare Seillänge bestimmt ist,
und für die
• Fahrzeug-Umsetzung (18) in andere Arbeitsstellungen und/oder in andere Hangwald-standorte, das Arbeitsgeräte-Fahrzeug (1) mit einem offenen Fahrer-Bedienstand (8), an der vorderen Motorseite (7) angeordnet, ausgestattet ist.

3. Rückeverfahren für Hangwald-Durchforstungen nach Patentanspruch 1 und 2,
**dadurch gekennzeichnet,**
**dass** die Folge und der zeitliche Ablauf der Verfahrensschritte des Rückeverfahrens in den halbkreisförmigen Rückebereichen benachbarter Arbeitsstellungen eines mosaikartig gebildeten, zusammenhängenden Hangwald-Standortes automatisiert und vom Bediener (30) des Arbeitsgeräte-Fahrzeuges (1) ferngesteuert durchführbar ist.
